# EUROPÄISCHE PATENTSCHRIFT

(11) **EP 1 190 531 B1**
(45) Veröffentlichungstag und Bekanntmachung des Hinweises auf die Patenterteilung: **08.12.2004**
(21) Anmeldenummer: 00945600.5
(22) Anmeldetag: 07.06.2000
(51) Int. Cl.: H04L 12/40, H04L 29/14, B60R 16/02

(54) **BUSTREIBERSCHALTUNG FÜR EIN ZWEILEITER-BUSSYSTEM**
PASS-DRIVER CIRCUIT FOR A TWO-CONDUCTOR BUS-SYSTEM
CIRCUIT PILOTE D'UN SYSTEME DE BUS A DEUX CONDUCTEURS

(30) Priorität: 09.06.1999 DE 19926173
(43) Veröffentlichungstag der Anmeldung: 27.03.2002
(73) Patentinhaber: ROBERT BOSCH GMBH, 70442 Stuttgart (DE)
(72) Erfinder: MATTES, Bernhard, D-74343 Sachsenheim (DE); SEIBOLD, Jochen, D-72070 Tuebingen (DE)
(86) Internationale Anmeldenummer: PCT/DE2000/001851
(87) Internationale Veröffentlichungsnummer: WO 2000/077977

(56) Entgegenhaltungen:
- DE-A- 3 901 589
- DE-A- 19 611 944
- US-A- 5 357 518

## Beschreibung

### Stand der Technik

Die vorliegende Erfindung betrifft eine Bustreiberschaltung für ein Zweileiter-Bussystem, an das eine die Bustreiberschaltung enthaltende Steuereinheit und mehrere Aktuator- und/oder Sensor-Module in einem Fahrzeug angeschlossen sind, wobei die Bustreiberschaltung bei einem Kurzschluß auf einer der beiden Busleitungen Signale in Form einer aus unterschiedlichen Spannungspegeln gebildeten Pulsfolge in die ungestörte Busleitung einspeist.

In Kraftfahrzeugen werden immer mehr Aktuatoren und Sensoren installiert, die z.B. für die Regelung des Antriebs, der Bremssysteme, des Fahrverhaltens und von Rückhaltesystemen zum Schutz der Fahrzeuginsassen zuständig sind. Durch die Einführung von Bussystemen, welche die Aktuatoren, die Sensoren und zugehörige Steuergeräte miteinander vernetzen, können voluminöse und schwere Kabelbäume eingespart werden.

Insbesondere bei einem Bus für ein sicherheitsrelevantes System, wie beispielsweise ein Rückhaltesystem, sind Maßnahmen zu ergreifen, damit Störungen auf den Busleitungen nicht zu einem Ausfall des Systems führen und deshalb in einer Crash-Situation die Rückhalteeinrichtungen nicht ausgelöst werden können. Für einen solchen Bus besteht daher die Forderung, daß selbst bei einem Kurzschluß auf einer der beiden Busleitungen gegen die Batteriespannung des Fahrzeugs oder gegen Masse trotzdem noch eine Signalübertragung zwischen einem zentralen Steuergerät und an den Bus angeschlossenen Aktuatoren und/oder Sensoren möglich ist. Aus diesem Grund ist in der älteren deutschen Patentanmeldung 198 13 952.7 eine einleitend dargelegte Bustreiberschaltung beschrieben, mit der es möglich ist, bei einem Kurzschluß auf einer der beiden Busleitungen Nachrichten in Form einer aus zwei unterschiedlichen Spannungspegeln gebildeten Pulsfolge über die intakte Busleitung zu übertragen. Die Bustreiberschaltung besteht aus einer an zwei verchiedenen Spannungspotentialen liegenden Reihenschaltung aus drei Schaltern.

### Aufgabe und Lösung

Der Erfindung liegt die Aufgabe zugrunde, eine Bustreiberschaltung der eingangs genannten Art anzugeben, die einen möglichst geringen Schaltungsaufwand erfordert und bei einem Kurzschluß auf einer der beiden Busleitungen die Einkopplung von Daten in den Bus ermöglicht, die von den an den Bus angeschlossenen Aktuator- und/oder Sensor-Modulen sicher identifiziert werden können.

Die genannte Aufgabe wird mit den Merkmalen des Patentanspruchs 1 dadurch gelöst, daß die Bustreiberschaltung aus mehreren, eine H-Brückenkonfiguration bildenden elektrisch steuerbaren Schaltern besteht, wobei in jedem der fünf H-Brückenzweige mindestens ein Schalter vorhanden ist, daß die beiden Busleitungen jeweils an ein Ende des Querzweiges der H-Brücke angeschlossen sind und daß die einzelnen Schalter in den Längszweigen der H-Brücke in mindestens zwei Positionen, die an unterschiedlichen Spannungspegeln liegen, schaltbar sind.

Vorteilhafte Weiterbildungen der Erfindung gehen aus den Unteransprüchen hervor.

Danach ist es zweckmäßig, daß die Schalter in zwei Längszweigen der H-Brücke, die von verschiedenen Enden des Querzweiges ausgehen, in Positionen schaltbar sind, welche auf hohen unterschiedlichen Spannungspegeln liegen und daß die Schalter in den beiden anderen Längszweigen in Positionen schaltbar sind, welche auf niedriegen unterschiedlichen Spannungspegeln liegen. Bei einem Kurzschluß auf einer der beiden Busleitungen werden die Schalter in denjenigen Längszweigen der H-Brücke, welche mit der ungestörten Busleitung verbunden sind, in solche Schaltpositionen versetzt, daß auf der ungestörten Busleitung eine gewünschte Pulsfolge entsteht. Bei einem Kurzschluß einer Busleitung nach Masse wird vorzugsweise ein mit dieser Busleitung verbundener Schalter, der eine auf Massepotential liegende Schaltposition aufweist, in diese Position geschaltet.

Bei Nachrichten mit einer hohen Übertragungsgeschwindigkeit ist es zweckmäßig, daß jeweils zwischen den Durchschaltungen unterschiedlicher Spannungspegel über Schalter in den Längszweigen der H-Brücke kurzzeitig der mindestens eine Schalter im Querzweig geschlossen wird. Dadurch erhöht sich die Flankensteilheit der übertragenen Impulse, und infolge dessen ist eine hohe Pulsübertragungsrate möglich. Nachrichten, die eine hohe Übertragungsgeschwindigkeit erfordern, sind z.B. Auslösebefehle für Rückhalteeinrichtungen.

Vorzugsweise werden die übertragenen Pulsfolgen manchestercodiert, womit eine einfache Synchronisation der Aktuator- und/oder Sensor-Module möglich ist.

### Zeichnung

Die Erfindung wird nachfolgend anhand eines in der Zeichnung dargestellten Ausführungsbeispiels näher erläutert. Es zeigen:
Figur 1 ein Schaltbild eines Bustreibers und mehrerer an den Bus angeschlossener Module,
Figuren 2a und 2b zwei mögliche Schaltvorgänge der Bustreiberschaltung bei ungestörten Busleitungen,
Figur 3a Schaltvorgänge der Bustreiberschaltung bei einem Kurzschluß der ersten Busleitung gegen Masse,
Figur 3b Schaltvorgänge der Bustreiberschaltung bei einem Kurzschluß der zweiten Busleitung nach Masse;
Figur 4a Schaltvorgänge der Bustreiberschaltung bei einem Kurzschluß der ersten Busleitung zur Batteriespannung des Fahrzeugs,
Figur 4b Schaltvorgänge der Bustreiberschaltung bei einem Kurzschluß der zweiten Busleitung zur Batteriespannung des Fahrzeugs und
Figur 5 Schaltvorgänge der Bustreiberschaltung bei ungestörten Busleitungen bei einer sehr schnellen Datenübertragung.

### Beschreibung eines Ausführungsbeispiels

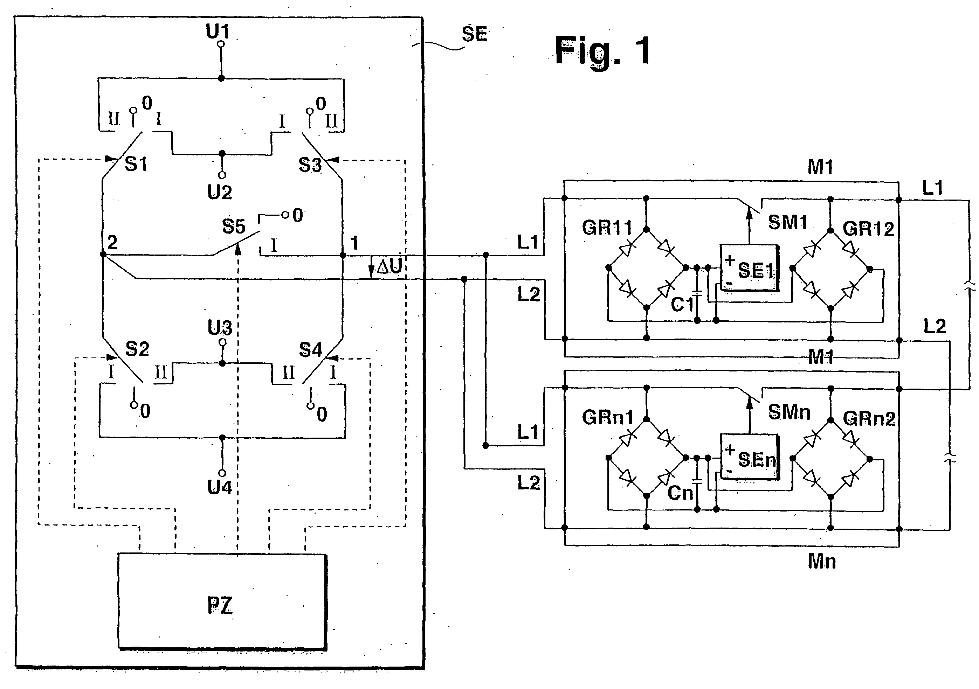

In der Figur 1 ist ein Bussystem dargestellt, bestehend aus einem Zweileiter-Bus L1 und L2, an den einerseits eine Steuereinheit SE und andererseits n Aktuator- und/oder Sensor-Module, von denen die Module M1 und Mn dargestellt sind, angeschlossen sind. Das dargestellte Zweileiter-Bussystem hat hier beispielsweise eine Ringstruktur, d.h. beide Enden der Busleitungen L1 und L2 sind an die Steuereinheit SE angeschlossen.

In der Steuereinheit SE befindet sich eine Bustreiberschaltung, die aus mehreren eine H-Brückenkonfiguration bildenden elektrisch steuerbaren Schaltern S1, S2, S3, S4 und S5 besteht. Die mit einem einfachen Schaltersymbol gekennzeichneten Schalter S1, ..., S5 sind in der Praxis vorzugsweise MOS-Feldeffekttransistoren. In den einzelnen Zweigen der H-Brücke können statt des einen eingezeichneten Schalters S1, ..., S5 auch mehrere Schalter vorgesehen werden, deren Schaltfunktion evtl. von der Richtung des den Schalter durchfließenden Stromes abhängt. Die Steuerung der einzelnen Schalter S1, ..., S5 erfolgt, wie durch strichliert gezeichnete Linien angedeutet, durch einen Prozessor PZ in der Steuereinheit SE. Die beiden Busleitungen L1 und L2 sind an dem Querzweig der H-Brücke, in dem der Schalter S5 liegt, angeschlossen. Und zwar ist die erste Busleitung L1 an einem Verbindungspunkt 1 zwischen dem Querzweig mit dem Schalter S5 und den beiden Längszweigen mit den Schaltern S3 und S4 der H-Brücke angeschlossen. Die zweite Busleitung L2 ist an dem Verbindungspunkt 2 zwischen dem anderen Ende des Querzweiges mit dem Schalter S5 und den beiden Längszweigen mit den Schaltern S1 und S2 angeschlossen.

Die Schalter S1, S2, S3 und S4 in den Längszweigen der H-Brücke weisen drei unterschiedliche Schaltpositionen 0, I und II auf. Die Schaltpositionen I der beiden Schalter S1 und S3 in den beiden oberen parallelen Längszweigen der H-Brücke liegen an einem Spannungspegel U2, und die Schaltpositionen II der beiden genannten Schalter S1 und S3 liegen an einem Spannungspegel U1. Der Spannungspegel U1 liegt z.B. etwa zwischen 20 und 30 V und der Spannungspegel U2 ist um wenige Volt (z.B. 2 V) geringer als der Spannungspegel U1. Die beiden Schalter S2 und S4 in den beiden unteren parallelen Längszweigen der H-Brücke stellen in ihren Schaltpositionen I eine Verbindung der Anschlußpunkte 1 und 2 für die beiden Busleitungen L1 und L2 zu einem Spannungspegel U4 her, der einen erheblich geringeren Wert hat als der Spannungspegel U1 und vorzugsweise das Massepotential von 0V ist. In der Schaltposition II legen die Schalter S2 und S4 die Anschlußpunkte 1 und 2 der beiden Busleitungen L1 und L2 an einen Spannungspegel U3, der einige Volt (z.B. 2V) oberhalb des untersten Spannungspegels U4 liegt.

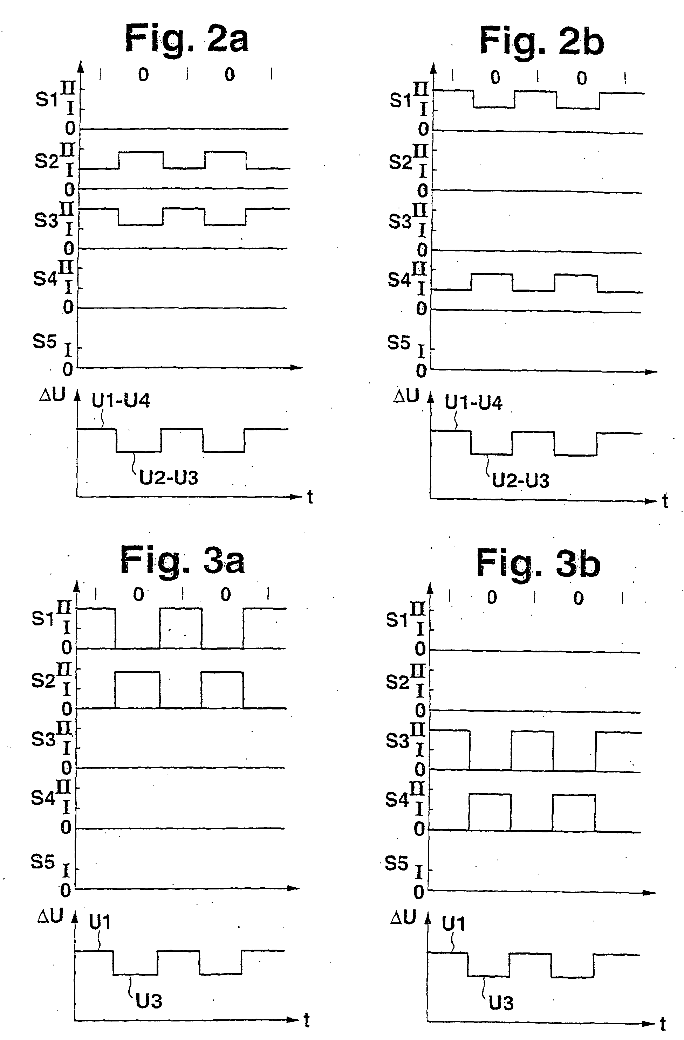

Wie der Prozessor PZ die einzelnen Schalter S1, ..., S5 der H-Brücke ansteuert, um eine Nachricht an die Module M1, Mn zu übertragen, wenn die beiden Busleitungen L1 und L2 ungestört sind, also kein Kurzschluß auftritt, ist in den Figuren 2a und 2b dargestellt. Die von der Steuereinheit SE über den Bus an die Module M1 bis Mn ausgesendeten Nachrichten haben die Form einer aus zwei unterschiedlichen Spannungspegeln gebildeten Pulsfolge, bei der z.B. eine hohe Differenzspannung ΔU zwischen den beiden Busleitungen L1 und L2 einer logischen 1 und eine niedrige Differenzspannung ΔU einer logischen 0 entspricht. Im unteren Teil der beiden Figuren 2a und 2b ist ein Verlauf der Differenzspannung ΔU zwischen den beiden Busleitungen L1 und L2 dargestellt, wenn z.B. eine Bitfolge 10101 übertragen werden soll. Der hohe Pegel der Differenzspannung ΔU, der einer logischen 1 entspricht, entsteht aus der Differenz zwischen den beiden Spannungspegeln U1 und U4, und der niedrige Differenzspannungspegel ΔU entspricht der Differenz zwischen den beiden Spannungspegel U2 und U3. Die beiden Differenzspannungspegel ΔU = U1 - U4 und ΔU = U2 - U3 entstehen entweder dadurch, daß, wie Figur 2a zeigt, die beiden mit den Busleitungen L1 und L2 verbundenen Schalter S2 und S3 oder, wie die Figur 2b zeigt, die mit den beiden Busleitungen L1 und L2 ebenfalls verbundenen Schalter S1 und S4 gleichtaktmäßig angesteuert werden. Um den höheren Differenzspannungspegel ΔU = U1 - U4 zu bilden, werden entweder der Schalter S2 in die Position I und der Schalter S3 in die Position II (Figur 2a) oder der Schalter S1 in die Schaltposition II und der Schalter S4 in die Schaltposition I (Figur 2b) gebracht. Der niedrigere Differenzspannungspegel ΔU = U2 - U3 ensteht dadurch, daß entweder der Schalter S2 in die Schaltpositon II und der Schalter S3 in die Schaltposition I (Figur 2a) oder der Schalter S1 in die Schaltposition I und der Schalter S4 in die Schaltposition II (Figur 2b) gebracht wird. Die Figuren 2a und 2b verdeutlichen, daß eine symmetrische gegenphasige Spannungsmodulation auf den Busleitungen L1 und L2 erzeugt wird, wodurch eine mögliche Störsignalabstrahlung sehr gering gehalten wird.

Alle anderen Schalter, außer den Schaltern S2 und S3 bzw. S1 und S4, bleiben in ihrer Schaltposition 0, so daß über diese keinerlei Spannungspotential an die Busleitungen L1 und L2 gelangt.

Aufgrund starker mechanischer Belastungen, insbesondere im Verlauf eines Unfalls, kann es zu einem Kurzschluß einer der beiden Busleitungen L1 oder L2 nach Masse oder nach der Batteriespannung im Fahrzeug kommen. Für eine sicherheitsrelevante Einrichtung, wie ein Rückhaltesystem, ist es sehr wichtig, daß selbst bei einem solchen Kurzschluß auf einer der beiden Busleitungen L1, L2 trotzdem noch eine Kommunikation zwischen der Steuereinheit und den Aktuatorund/oder Sensor-Modulen M1, Mn möglich ist. Bei einem Rückhaltesystem besteht die Kommunikation zwischen der Steuereinheit SE und den an den Busleitungen L1, L2 angeschlossenen Modulen M1, Mn im wesentlichen aus einer Diagnoseabfrage, welche die Steuereinheit SE an die einzelnen Module M1, Mn richtet, und - im Falle eines Crashes - aus Befehlen zur Auslösung der von den Modulen M1, Mn angesteuerten Rückhalteeinrichtungen (Airbags,. Gurtstraffer etc.).

Damit bei einem Kurzschluß die Bustreiberschaltung vom Prozessor PZ für eine Signalübertragung über den Bus geeignet angesteuert werden kann, sind Mittel erforderlich, welche erkennen, ob und auf welcher der beiden Busleitungen L1, L2 ein Kurzschluß vorliegt. Solche Kurzschlußerkennungen sind z.B. aus der DE 195 09 133 A1 bekannt. Auf die an sich bekannte Kurzschlußerkennung wird hier nicht näher eingegangen, da sie nicht Gegenstand der Erfindung ist.

Wie im Falle eines Kurzschlusses der Busleitung L1 gegen Masse die Schalter S1, ..., S5 der H-Brücke anzusteuern sind, wenn z.B. eine Bitfolge 10101 zu den Modulen M1, Mn übertragen werden soll, ist in der Figur 3a dargestellt. Eine logische 1 entsteht dadurch, daß einerseits der mit der nicht kurzgeschlossenen Busleitung L2 verbundene Schalter S1 in die Schaltposition II und der ebenfalls mit der Busleitung L2 verbundene Schalter S2 in die Schaltposition 0 gebracht wird. Dann liegt die Busleitung L2 an der Spannung U1, und somit liegt zwischen der Leitung L2 und der an Masse kurzgeschlossenen Leitung L1 eine Spannungsdifferenz ΔU = U1. Soll eine logische 0 übertragen werden, so wird der Schalter S1 in die Schaltposition 0 und der Schalter S2 in die Schaltposition II gebracht. Dann liegt die Leitung L2 auf dem Spannungspegel U3, und zwischen der Leitung L2 und der an Masse kurzgeschlossenen Leitung L1 besteht eine Spannungsdifferenz ΔU = U3. Es ist zweckmäßig, den Schalter S4 dauernd in die Schaltposition I zu versetzen, um somit die kurzgeschlossene Leitung L1 fest auf das Potential U4 = 0V entsprechend dem Massepotential zu legen. Der Schalter S4 kann aber auch in der Schaltposition 0 gehalten werden. Die Schaltposition 0 nehmen auch die anderen Schalter S3 und S4 dauerhaft ein.

In der Figur 3b sind die Schaltpositionen für den Fall dargestellt, daß die Leitung L2 gegen Masse kurzgeschlossen ist. Um hier eine logische 1 über den Bus zu übertragen, wird der Schalter S3 in die Schaltposition II und der Schalter S4 in die Schaltposition 0 gebracht. Dann liegt die Leitung L1 auf dem Spannungspegel U1. Zwischen der Leitung L1 und der gegen Masse kurzgeschlossenen Leitung L2 liegt nun eine Differenzspannung ΔδU = U1. Eine logische 0 entsteht dadurch, daß der Schalter S3 in die Schaltposition 0 und der Schalter S4 in die Schaltpositon II gebracht wird. Jetzt liegt zwischen den beiden Leitungen L2 und L1 eine Spannungsdifferenz ΔU = U3. Der Schalter S2 kann dauerhaft in die Schaltposition I versetzt werden, so daß die gegen Masse kurzgeschlossene Leitung L2 auf dem Potential U4 gehalten wird, welche 0 V beträgt und daher dem Massepotential entspricht. Die anderen Schalter S1 und S5 werden dauerhaft in der Schaltposition 0 gehalten.

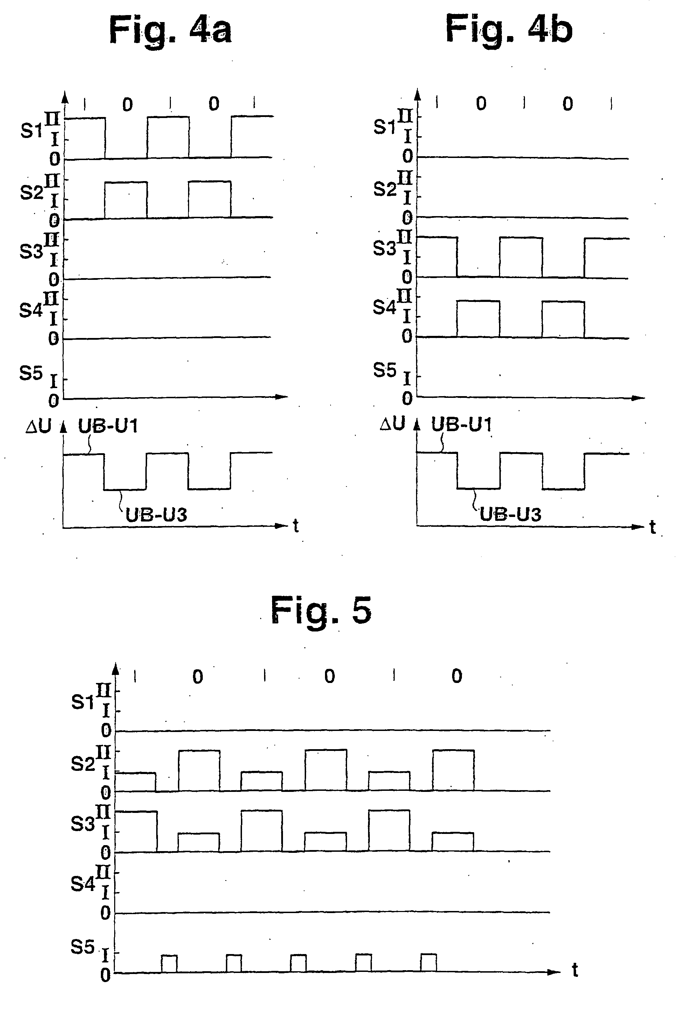

In der Figur 4a sind die Schaltpositionen der Schalter S1, ..., S5 für den Fall dargestellt, daß die erste Busleitung L1 gegen die Batteriespannung UB des Fahrzeugs kurzgeschlossen ist. Für die Übertragung einer logischen 1 wird der Schalter S1 in die Schaltposition II und der Schalter S2 in die Schaltposition 0 gebracht. Dann herrscht zwischen der Leitung L2 und der gegen die Batteriespannung UB kurzgeschlossenen Leitung L1 eine Differenzspannung ΔU = UB - U1. Eine logische 0 entsteht dadurch, daß der Schalter S1 in die Schaltposition 0 und der Schalter S2 in die Schaltposition II gebracht wird. Dann beträgt die zwischen den Leitungen L1 und L2 herrschende Differenzspannung ΔU = UB - U3. Die anderen Schalter S3, S4 und S5 bleiben in der Schaltposition 0.

In der Figur 4b sind die Schaltpositionen dargestellt für den Fall, daß die zweite Busleitung L2 gegen die Batteriespannung UB kurzgeschlossen ist. Hier entsteht eine logische 1 dadurch; daß der Schalter S3 in die Schaltposition II und der Schalter S4 in die Schaltposition 0 gebracht wird. Zwischen den beiden Leitungen L1 und L2 liegt dann eine Differenzspannung ΔU = UB - U1. Eine logische 0 entsteht auf dem Bus dadurch, daß der Schalter S3 in die Schaltposition 0 und der Schalter S4 in die Schaltposition II gebracht wird. In diesem Fall liegt zwischen den Leitungen L1 und L2 eine Differenzspannung ΔU = UB - U3. Die Schalter S1, S2 und S5 bleiben in der Schaltposition 0.

Soll eine Nachricht mit möglichst hoher Geschwindigkeit über den Bus zu den einzelnen Modulen M1, Mn übertragen werden, z.B. ein Zündbefehl mit einer Bitrate von z.B. 125 kBit/s, so wird, wie in der Figur 5 dargestellt, zwischen den Durchschaltungen zweier unterschiedlicher Spannungspegel kurzzeitig der Schalter S5 im Querzweig der H-Brücke in die Schaltposition I gebracht, wodurch die beiden Busleitungen L1 und L2 kurzzeitig miteinander verbunden und damit beide auf das gleiche Spannungspotential gebracht werden. In der Figur 5 ist beispielhaft eine Nachrichtenübertragung über den Bus dargestellt, wenn beide Busleitungen L1 und L2 ungestört sind, also keinen Kurzschluß aufweisen. Die Figur 5 macht deutlich, daß immer dann, wenn ein Wechsel der beiden Schalter S2 und S3 von der Schaltposition I in die Schaltposition II und umgekehrt erfolgt, der Schalter S5 kurzzeitig geschlossen wird. Durch diese Maßnahme wird erreicht, daß die einzelnen Signalimpulse eine höhere Flankensteilheit erhalten und deshalb eine höhere Bitrate möglich ist. Gerade bei Signalen mit einem hohen Spannungshub, wie Auslösebefehle, ist eine höhere Flankensteilheit erforderlich, um eine hohe Bitrate zu erreichen.

Es ist zweckmäßig, die Nachrichten mit dem bekannten Manchester-II-Code zu übertragen, weil damit eine möglichst wenig störanfällige Übertragung möglich ist und außerdem eine einfache Synchronisation der Module M1, Mn gewährleistet ist.

Die Module M1, Mn besitzen jeweils eine Steuerelektronik SE1, SEn. Falls es sich bei den Modulen M1, Mn um Aktuator-Module handelt, so hat die Steuerelektronik SE1, SEn die Aufgabe, die Auslösung der mit den Modulen M1, Mn verbundenen Rückhaltemitteln zu steuern. Auch kann die Steuerelektronik SE1, SEn eine Fehlerdiagnose-Funktion für die in den Modulen M1, Mn vorhandenen Schaltungsmittel und die zugehörigen Zündvorrichtungen der Rückhaltemittel haben. Ebenso ist die Steuerelektronik SE1, SEn für die Ansteuerung eines Längschalters SM1, SMn zuständig. Sollten nämlich beide Busleitungen L1, L2 an einer Stelle miteinander kurzgeschlossen oder einen gleichzeitigen Kurzschluß gegen Masse und Batteriespannung aufweisen, so werden in den dieser Kurzschlußstelle direkt benachbarten Modulen die Längsschalter geöffnet. Sofern es sich um einen ringförmigen Bus handelt, wie in der Figur 1 dargestellt, können trotz eines solchen Kurzschlusses Daten und Energie von der Steuereinheit SE zu allen Modulen M1, Mn übertragen werden, weil eine Daten- und Energieübertragung auf dem ringförmigen Bus in beiden Richtungen (linksherum, rechtsherum) möglich ist.

Falls die Stromversorgung für die Steuerelektronik SE1, SEn in den Modulen M1, Mn über den Bus von der Steuereinheit SE erfolgt, ist zu beiden Seiten des Längsschalters SM1, SMn jeweils ein Brückengleichrichter, bestehend aus einem Diodenring GR11 und GR12, GRn1 und GRn2, zwischen die beiden Busleitungen L1, L2 geschaltet. Damit ist es möglich, aus dem über die Busleitung übertragenen Datensignal, egal in welche Richtung auf der Busleitung dieses Datensignal übertragen wird, eine Gleichversorgungsspannung für die Steuerelektronik SE1, SEn zu gewinnen.

Der Steuerelektronik SE1, SEn ist jeweils ein Kondensator C1, Cn vorgeschaltet, der als Energiepuffer bei der Übertragung von Signalen (Auslösebefehle) mit hohem Spannungshub dient.

## Patentansprüche

1. Bustreiberschaltung für ein Zweileiter-Bussystem, an das eine die Bustreiberschaltung (S1, ..., S5) enthaltende Steuereinheit und mehrere Aktuator- und/oder Sensor-Module (M1, Mn) in einem Fahrzeug angeschlossen sind, wobei die Bustreiberschaltung (S1, ..., S5) bei einem Kurzschluß auf einer der beiden Busleitungen (L1, L2) Signale in Form einer aus unterschiedlichen Spannungspegeln gebildeten Pulsfolge in die ungestörte Busleitung (L1, L2) einspeist, **dadurch gekennzeichnet, daß** die Bustreiberschaltung aus mehreren, eine H-Brückenkonfiguration bildenden elektrisch steuerbaren Schaltern (S1, ..., S5) besteht, wobei in jedem der fünf H-Brückenzweige mindestens ein Schalter (S1, ..., S5) vorhanden ist, daß die beiden Busleitungen (L1, L2) jeweils an ein Ende (1, 2) des Querzweiges der H-Brücke angeschlossen sind und daß die einzelnen Schalter (S1, ..., S4) in den Längszweigen der H-Brücke in mindestens zwei Positionen (0, I, II), die an unterschiedlichen Spannungspegeln (U1, U2, U3, U4) liegen, schaltbar sind.

2. Bustreiberschaltung nach Anspruch 1, **dadurch gekennzeichnet, daß** die Schalter (S1, S3) in zwei Längszweigen der H-Brücke, die von verschiedenen Enden (1, 2) des Querzweiges ausgehen, in Positionen (I, II) schaltbar sind, welche auf hohen unterschiedlichen Spannungspegeln (U1, U2) liegen und daß die Schalter (S2, S4) in den beiden anderen Längszweigen in Positionen (I, II) schaltbar sind, welche auf niedrigen unterschiedlichen Spannungspegeln (U3, U4) liegen.

3. Bustreiberschaltung nach Anspruch 2, **dadurch gekennzeichnet, daß** bei einem Kurzschluß auf einer der beiden Busleitungen (L1, L2) die Steuereinheit (SE) die Schalter (S1, S2 oder S3, S4) in denjenigen Längszweigen der H-Brücke, welche mit der ungestörten Busleitung (L1, L2) verbunden sind, in solche Schaltpositionen (0, I, II) versetzen, daß auf der ungestörten Busleitung eine gewünschte Pulsfolge (ΔU) entsteht.

4. Bustreiberschaltung nach Anspruch 3, **dadurch gekennzeichnet, daß** bei einem Kurzschluß einer Busleitung (L1, L2) nach Masse ein mit dieser Busleitung (L1, L2) verbundener Schalter (S2, S4), der eine auf Massepotential (U4) liegende Schaltposition (I) aufweist, in diese Position (I) geschaltet wird.

5. Bustreiberschaltung nach einem der vorhergehenden Ansprüche, **dadurch gekennzeichnet, daß** jeweils zwischen den Durchschaltungen unterschiedlicher Spannungspegel über Schalter (S1, ..., S4) in den Längszweigen der H-Brücke kurzzeitig der mindestens eine Schalter (S5) im Querzweig geschlossen wird.

6. Bustreiberschaltung nach Anspruch 1, **dadurch gekennzeichnet, daß** die übertragene Pulsfolge Manchestercodiert ist.

## Claims

1. Bus driver circuit for a two-conductor bus system, to which a control unit which contains the bus driver circuit (S1, ..., S5) and two or more actuator and/or sensor modules (M1, Mn) in a vehicle are connected, with the bus driver circuit (S1, ..., S5) feeding signals in the form of a pulse sequence, which is formed from different voltage levels, into the sound bus line (L1, L2) in the event of a short circuit on one of the two bus lines (L1, L2), **characterized in that** the bus driver circuit comprises two or more electrically controllable switches (S1, ..., S5) which form an H-bridge configuration, with at least one switch (S1, ..., S5) being provided in each of the five H-bridge arms, **in that** the two bus lines (L1, L2) are each connected to one end (1, 2) of the transverse arm of the H bridge, and **in that** the individual switches (S1, ..., S4) in the longitudinal arms of the H bridge can be switched to at least two positions (0, I, II), which are at different voltage levels (U1, U2, U3, U4).

2. Bus driver circuit according to Claim 1, **characterized in that** the switches (S1, S3) in two longitudinal arms of the H bridge, which originate from different ends (1, 2) of the transverse arm, can be switched to positions (I, II) which are at high different voltage levels (U1, U2), and **in that** the switches (S2, S4) in the two other longitudinal arms can be switched to positions (I-II) which are at low different voltage levels (U3, U4).

3. Bus driver circuit according to Claim 2, **characterized in that**, in the event of a short circuit on one of the two bus lines (L1, L2), the control unit (SE) switches the switches (S1, S2 or S3, S4) in those longitudinal arms of the H bridge which are connected to the sound bus line (L1, L2) to switching positions (0, I, II) such that a desired pulse sequence (ΔU) is produced on the sound bus line.

4. Bus driver circuit according to Claim 3, **characterized in that**, in the event of a short circuit on a bus line (L1, L2) to earth, one switch (S2, S4) which is connected to this bus line (L1, L2) and which has a switching position (I) in which it is connected to earth potential (U4) is switched to this position (I).

5. Bus driver circuit according to one of the preceding claims, **characterized in that** the at least one switch (S5) in the transverse arm is in each case briefly closed between the processes of switching on different voltage levels via switches (S1, ... S4) in the longitudinal arms of the H bridge.

6. Bus driver circuit according to Claim 1, **characterized in that** the pulse sequence which is transmitted is Manchester-coded.

## Revendications

1. Circuit pilote de bus d'un système de bus à deux conducteurs auquel sont reliés une unité de commande comportant le circuit pilote de bus (S1, ..., S5) et plusieurs modules d'actionneur et/ou de détecteur (M1, Mn) dans un véhicule,
le circuit pilote de bus (S1, ..., S5), en cas de court-circuit de l'un des deux conducteurs du bus (L1, L2), injecte des signaux sous la forme d'une suite d'impulsions formées par des niveaux de tension différents dans le conducteur de bus (L1, L2) non perturbé,
**caractérisé en ce que**
le circuit pilote de bus se compose de plusieurs commutateurs (S1, ..., S5) à commande électrique formant une configuration de pont en H, dont chacune des cinq branches a au moins un commutateur (S1, ..., S5),
les deux conducteurs de bus (L1, L2) étant reliés respectivement à une extrémité (1, 2) de la branche transversale du pont en H et
les différents commutateurs (S1, ..., S4) des branches longitudinales du pont en H peuvent être commutés dans au moins deux positions (0, I, II) mis à des niveaux de tension différents (U1, U2, U3, U4).

2. Circuit pilote de bus selon la revendication 1,
**caractérisé en ce que**
les commutateurs (S1, S3) des deux branches longitudinales du pont en H, partant d'extrémités différentes (1, 2) de la branche transversale, peuvent être commutés dans des positions (I, II) mises à des niveaux de tension différents (U1, U2) et
les commutateurs (S2, S4) des deux autres branches longitudinales peuvent être commutés dans des positions (I, II) situées à des niveaux de tension différents faibles (U3, U4).

3. Circuit pilote de bus selon la revendication 2,
**caractérisé en ce qu'**
en cas d'un court-circuit sur l'un des deux conducteurs de bus (L1, L2), l'unité de commande (SE) fait passer les commutateurs (S1, S2 ou S3, S4) des branches longitudinales respectives du pont en H, reliés à la ligne de bus non perturbée (L1, L2), dans des positions de commutation (0, I, II) de façon à former une suite d'impulsions souhaitée (ΔU) sur le conducteur de bus non perturbé.

4. Circuit pilote de bus selon la revendication 3,
**caractérisé en ce qu'**
en cas de court-circuit d'un conducteurs de bus (L1, L2) avec la masse, un commutateur (S2, S4) relié à ce conducteur de bus (L1, L2) et qui présente une position de commutation (I) mise au potentiel de la masse (U4), est commuté dans cette position (I).

5. Circuit pilote de bus selon l'une des revendications précédentes,
**caractérisé en ce qu'**
on ferme brièvement au moins un commutateur (S5) de la branche transversale chaque fois pour les commutations entre des niveaux de tension différents par les commutateurs (S1, ..., S4) dans les branches longitudinales du pont en H.

6. Circuit pilote de bus selon la revendication 1,
**caractérisé en ce que**
la suite d'impulsions transmise est codée selon le code Manchester.
